(19)

Europäisches Patentamt

European Patent Office

Office européen des brevets

(11) **EP 1 198 099 A2**

(12) **EUROPEAN PATENT APPLICATION**

(43) Date of publication:
**17.04.2002 Bulletin 2002/16**

(51) Int Cl.⁷: **H04L 27/20**, H04L 25/03

(21) Application number: **01308640.0**

(22) Date of filing: **10.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.10.2000 GB 0024799**

(71) Applicant: **SEIKO EPSON CORPORATION**
**Shinjuku-ku Tokyo (JP)**

(72) Inventor: **Westall, Fred,c/o Epson Scotland Design Centre**
**Livingston EH54 7EG, Scotland (GB)**

(74) Representative: **Kenyon, Sarah Elizabeth et al**
**Miller Sturt Kenyon**
**9 John Street**
**London WC1N 2ES (GB)**

# (54) GMSK modulator, using direct digital synthesis

(57) A signal processor for modulating input data containing phase information, the processor comprising: a data input unit for receiving the input data, a memory unit for storing a look up table addressable by the input data, a multiplexer unit for multiplexing outputs from the memory unit, an accumulated phase unit for extracting phase information from the input data, and a digital-to-analog converter for receiving an input from the multiplexer unit and providing the output of the signal processor, characterised in that the accumulated phase unit is connected between the data input unit and the multiplexer unit so as to bypass the memory unit and in that a bypass path is connected between the data input unit and the digital-to-analog converter so as to enable part of the input data to bypass the memory unit. Also a signal processor for modulating and/or demodulating input data containing phase information, the processor comprising: a data input unit for receiving the input data, a coordinate rotation processor connected to receive data from the data input unit, and a digital-to-analog converter for receiving an input from the coordinate rotation processor and providing the output of the signal processor, characterised in that the coordinate rotation processor is arranged so as to use the received data to calculate a correlative phase state as well as perform iterative phase rotations while also deriving an accumulated phase angle. The invention also provides various methods of signal processing.

Figure 7

Data in (271 kbit/s)
ExOr
MS bit
Shift Register
Look-Up Table
32x8x2
Sample Time index
0,1,2,3 ...7,0 ....
I
Q
I'
Q'
MUX
DAC
+/-
Select Logic (Table 1)
I/P
Accum. Phase
Delay
Mod 4
ExOr

Table 1

| I/P | I' | Q' |
|---|---|---|
| 0 | I | Q |
| $\pi/2$ | -Q | I |
| $-\pi/2$ | Q | -I |
| $\pi$ | -I | -Q |

EP 1 198 099 A2

## Description

The present invention relates to modulation and demodulation for signal transmission, for example GMSK (Gaussian Minimum Shift Keying) modulation. GMSK is the standard modulation technique employed in so-called second generation GSM systems.

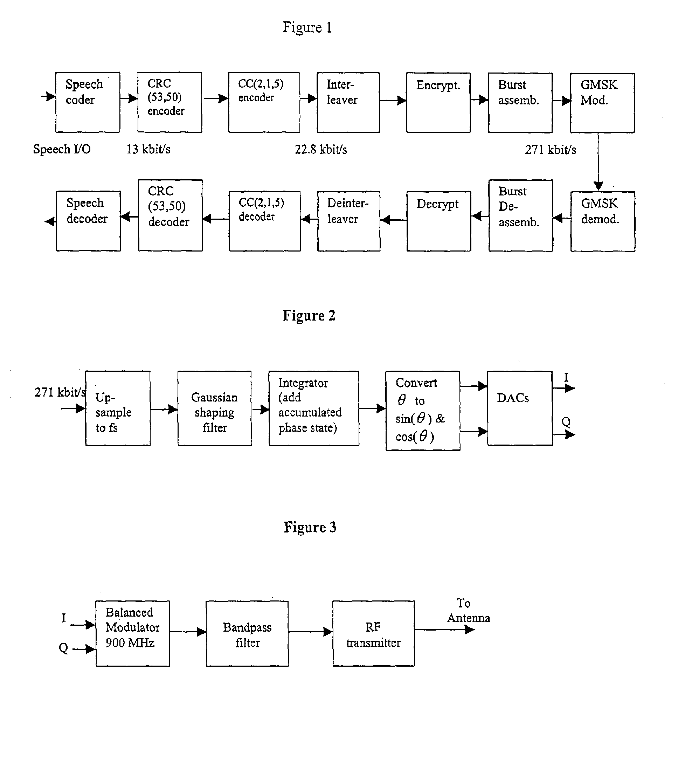

GMSK provides improved spectral efficiency (mainlobe-to-sidelobe energy) compared with other modulation techniques such as MSK, but with more complexity in the receiver. This disadvantage can be reduced if the GMSK detection process is combined with channel equalisation to remove the effect of ISI (controlled and channel induced) in one go. This is typically achieved in GSM through the use of the well-known Viterbi Algorithm. Figure 1 shows a block diagram for a GSM system. The blocks of main interest herein are those marked "GMSK Mod." and "GMSK demod". The GMSK module can be implemented either in hardware in the RF section or as a baseband function in a Digital Signal Processor (DSP), or in firmware.

GMSK baseband processing is conventionally achieved using a DSP but the processing can be achieved efficiently using table look-ups. Such a system is disclosed in US patent 5,022,054. The required processing power (MIP's) and ROM capacity are very high. This has a large and undesirable effect on power consumption and thus battery life. Such a high level of functionality has been achieved in mobile telephones and the like that now, possibly, the most important sales criteria is battery size/life.

It is an object of the present invention to improve signal processing efficiency so that savings can be made in power consumption and that, preferably, other desirable savings can also be made.

According to a first aspect of the present invention there is provided a signal processor for modulating and/or demodulating input data containing phase information, the processor comprising: a data input unit for receiving the input data, a memory unit for storing a look up table addressable by the input data, a multiplexer unit for multiplexing outputs from the memory unit, an accumulated phase unit for extracting phase information from the input data, and a digital-to-analog converter for receiving an input from the multiplexer unit and providing the output of the signal processor, characterised in that the accumulated phase unit is connected between the data input unit and the multiplexer unit so as to bypass the memory unit and in that a bypass path is connected between the data input unit and the digital-to-analog converter so as to enable part of the input data to bypass the memory unit.

Preferably the signal processor according to the first aspect of the invention further comprising a coordinate rotation processor connected for processing the output of memory unit before it is passed to the multiplexer unit.

According to a second aspect of the present invention there is provided a signal processor for modulating and/or demodulating input data containing phase information, the processor comprising: a data input unit for receiving the input data, a coordinate rotation processor connected to receive data from the data input unit, and a digital-to-analog converter for receiving an input from the coordinate rotation processor and providing the output of the signal processor, characterised in that the coordinate rotation processor is arranged so as to use the received data to calculate a correlative phase state as well as perform iterative phase rotations while also deriving an accumulated phase angle.

Beneficially, the coordinate rotation processor is a bit-serial recursive processor.

According to a third aspect of the present invention there is provided a method of signal processing comprising modulating and/or demodulating input data containing phase information using a processor having: a data input unit, a memory unit, a multiplexer unit, an accumulated phase unit, and a digital-to-analog converter, the method comprising the steps of: applying the input data to the data input unit, storing in the memory unit a look up table addressable by the input data, multiplexing outputs from the memory in the multiplexer unit, extracting phase information from the input data using the accumulated phase unit, and converting the output of the multiplexer unit to provide an analog output using the digital-to-analog converter, characterised by passing the extracted phase information to the multiplexer unit so as to bypass the memory unit and applying part of the input data to the digital-to-analog converter so that said part of the input data bypasses the memory unit.

Preferably, the method of signal processing according to the third aspect of the invention further comprising the step of performing an iterative process to calculate cos and sin values from phase angle information output from the memory unit and applying the calculated cos and sin values to the multiplexer unit for the multiplexing step.

Beneficially, the step of performing an iterative process consists of add/subtract operations and a right bit shift operation.

Also beneficially, the iterative process involves the application of successive phase rotations with a convergence towards zero.

According to a fourth aspect of the present invention there is provided a method of signal processing comprising modulating and/or demodulating input data containing phase information using a processor having: a data input unit, for receiving the input data, a coordinate rotation processor connected to receive data from the data input unit, and a digital-to-analog converter for receiving an input from the coordinate rotation processor and providing the output of the signal processor, characterised by: performing calculation of a correlative phase state; performing iterative phase rotations; and deriving an accumulated phase angle all within the coordinate rotation processor.

Embodiments of the present invention will now be described by way of further example only and with reference to the accompanying drawings; in which:-

Figure 1 is a block diagram of a GSM system;
Figure 2 is a block diagram showing conventional GMSK baseband processing;
Figure 3 is a block diagram illustrating RF section GMSK processing;
Figure 4 is an equation which is used to determine coefficients for a filter;
Figure 5 is an equation which is used to determine a phase angle used in signal modulation;
Figure 6 is a block diagram illustrating a simplified GMSK baseband transmitter;
Figure 7 is a block diagram illustrating a first embodiment of the present invention;
Figure 8 is a block diagram illustrating a second embodiment of the present invention;
Figure 9 is an equation useful in relation to vector rotation by a phase angle $\psi$;
Figure 10 is an equation which results from expanding and simplifying the equation shown in figure 9;
Figure 11 is an equation which is used to determine certain phase angles;
Figure 12 is a diagram illustrating vector rotation;
Figure 13 is an equation which is used to determine certain results based on the equation shown in figure 10;
Figure 14 is a table which contains information related to vector rotation;
Figure 15 is an equation which is used to determine values of a rotated vector;
Figure 16 is an equation which is used to determine a desired phase angle;
Figure 17 is a block diagram of a circuit which can be used to implement an iterative technique for calculating Cartesian coordinates; and
Figure 18 is a block diagram of part of a simplified transmitter circuit in accordance with an embodiment of the present invention.

GMSK processing will be further explained with reference to figures 2 and 3. The input to the GMSK modulator is a 271 kbit/s data stream organised as a GSM 'normal' burst with 8 TDMA coded speech channels and a 26-bit preamble inserted in the middle of the burst. This baseband data stream must be converted to the 900 MHz frequency band by some combination of spectral shaping and frequency translation. This is conventionally achieved using the baseband/passband split indicated in figures 2 and 3.

Typically the baseband processing is performed in a DSP and the RF processing is special purpose high-frequency hardware. It is notoriously difficult to achieve the required balance between the quadrature oscillators and the desired frequency stability on the transmitted carrier, especially at the high RF frequencies used in GSM (900 MHz).

Referring to figure 2, the incoming data ('Normal' burst) at 271 kbit/s is first up-sampled by inserting zeros between successive data symbols. For example, if the up-sampling ratio is 8 (which gives a sampling rate for the GMSK transmitter of 2.168 MHz) then each data symbol (+1 or -1) is followed by 7 zeros.

The interpolation of this data to the higher sampling rate is achieved in the Gaussian shaping filter, which is typically implemented as a Finite Impulse Response (FIR) digital filter. Controlled intersymbol interference is added by extending the influence of the Gaussian shaping filter over L data symbol intervals (i.e. the FIR time span is L.T, where T is the symbol duration). Typically, L is in the range 2 to 4. Assuming L=4 (typical for a modulation index in the range 0.5 to 0.3) then the Gaussian shaping filter requires 32 coefficients (4 x 8) and approximately 64 MIP's (32 x 2.168) for this part of the GMSK transmitter alone. This is much more than a normal DSP can handle.

Recognising that very few of the +1 or -1 samples stored in the (over-sampled) digital filter are non-zero (in fact only four are). This reduces the digital filter processing to the form:

$$\theta\text{out} = g_n \pm g_{n+m} \pm g_{n+2m} \pm g_{n+3m}$$

However, this still requires 4 x 2.168 MIP's unless the multiple accumulators in the DSP can be exploited to undertake parallel processing.

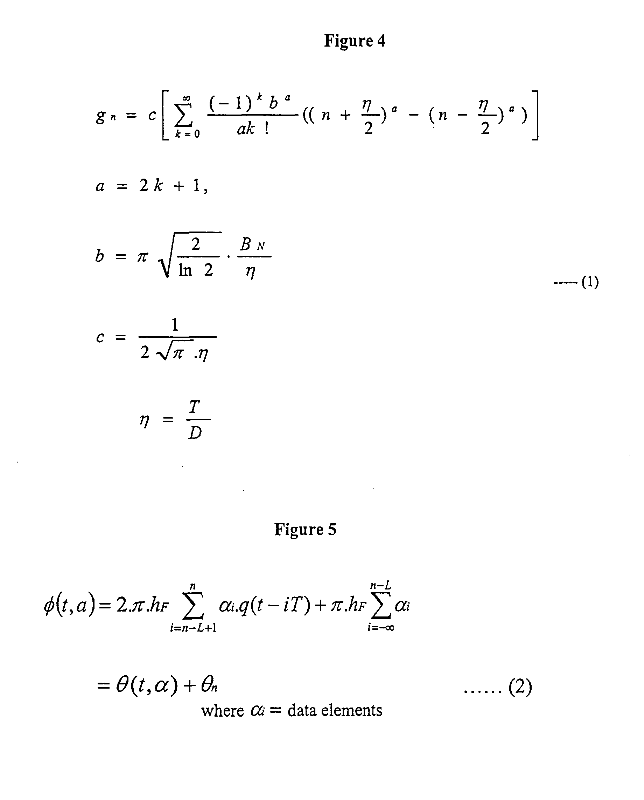

The filter coefficients for the shaping filter are derived by convolving a non return to zero (NRZ) data stream of unity amplitude with a Gaussian low pass filter. It can be shown that the discrete coefficients of the shaping filter (gn) are given by equation 1 shown in figure 4, in which $B_N = B_b.T$ and $B_b$ is the bandwidth of a low pass filter having a Gaussian shaped spectrum, and T is the bit period. The use of 100 terms in the expansion of equation 1 and quadruple precision arithmetic are satisfactory for generating $g_n$.

The phase angle delivered to the phase modulator by the Gaussian shaping filter is given by equation 2 shown in figure 5, in which $\theta(t,\alpha)$ is the correlative state vector that depends on the L most recent symbols currently in the shaping filter. The second term $\theta_n$ is the accumulated phase of all the previous symbols that have passed through the filter and is referred to as the phase state. It is here noted that if the modulation index ($h_F$) is 0.5, then the phase state can only have the values of 0, $\pi/2$, $-\pi/2$, or $\pi$ (i.e. 4 values). If the modulation index is 0.3 then the phase state can have six values (i.e. 0, $\pi/3$, $-\pi/3$, $2\pi/3$, $-2\pi/3$ and $\pi$).

The final stage of baseband processing for the GMSK transmitter is the conversion of phase to the I and Q values for passing to the RF transmitter. This can be completed algorithmically or it can be implemented as a look-up table. Simulations have shown that 256 values, each producing an 8-bit value for COS($\theta$) and SIN($\theta$) are sufficient to meet the GSM transmit power/frequency mask.

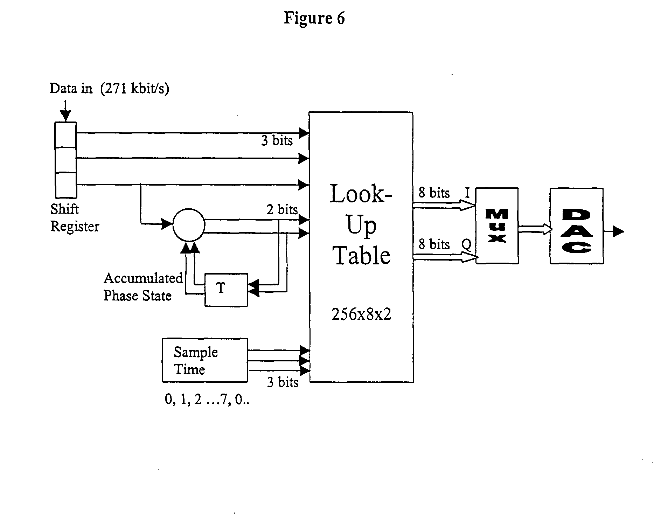

By noting that the input data are an over-sampled set of restricted data symbols (+1, 0 or - 1) and that this also applies to the accumulated phase state $\theta_n$, it is possible to replace the processing in figure 2 with the Simplified GMSK Baseband Transmitter shown in figure 6. The data input is applied to a shift register which outputs 3 bits $\theta(t,\alpha)$ to the look-up table. Phase information is extracted from the shift register output and, using a feedback loop, the accumulated phase $\theta_n$ is derived. The accumulated phase information is applied to the look up table as 2 bits. The sample timing is also applied to the look up table, as the final 3 bits making up the full 8 bit input to the table. The 8-bit output values from the look up table (ROM) are then multiplexed (indicated by MUX in figure 6) before being converted to analogue I, Q values (in the DAC unit) for the RF section.

Using typical parameters for a GMSK system conforming to GSM, then L=3, $h_F$ = 0.5, 8x over-sampling. As indicated in figure 6, this will require a total of 512 (8 bit) ROM locations storing alternately the appropriate SIN($\theta_n$) and COS($\theta_n$) values. The actual values to be stored in the ROM can be easily calculated from the equations 1 and 2.

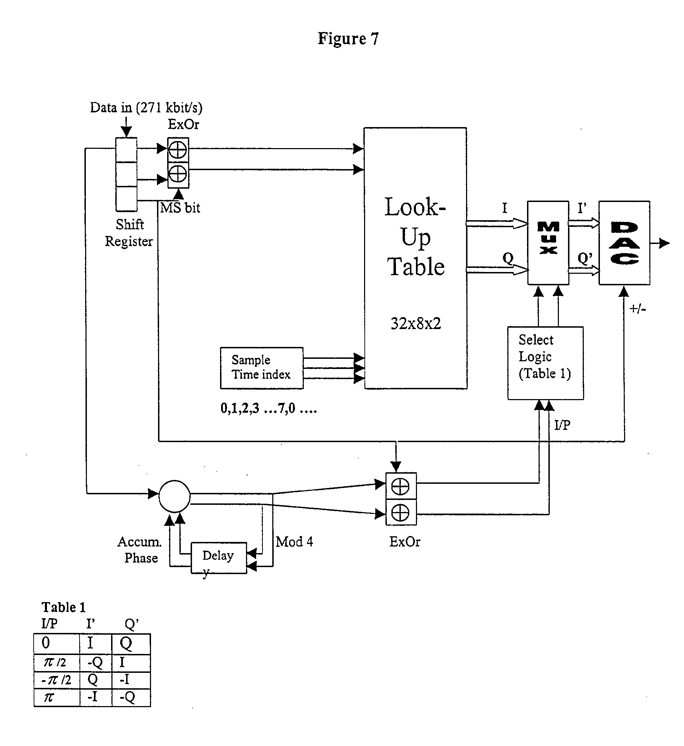

The present invention improves upon the design shown in figure 6 so as dramatically to reduce the amount of ROM required, and hence the chip area and power dissipation. Thus an embodiment of the present invention is illustrated in figure 7. In common with the circuit of figure 6, the circuit of figure 7 includes a shift register receiving the data input, a look up table implemented as a ROM, a three bit sampling time input to the ROM, 8 bit I/Q outputs to a multiplexer (MUX) and a digital to analog converter (DAC). The phase information is processed differently and a small amount of additional circuitry is provided, as is explained below.

As shown in figure 7, the accumulated phase information is not input in to the look up table but is processed separately therefrom. That is, by recognising that the accumulated phase can only have values which are multiples of $\pi/2$, the phase angle delivered to the modulator (MUX) consists of simple 90 degree rotations of the phase output from the Gaussian filter. The phase information is simply used to rotate the outputs I/Q. This is achieved by feeding the accumulated phase information to a pair of ExOr gates, applying the output therefrom to a select logic, the output of which is feed to the modulator. The select logic implements a simple table, Table 1 (see figure 7), which provides the required 90 degree rotations.

In addition, symmetries in the input data are exploited by only storing the 'positive' values of the 3 bit input sequence in the ROM. The 'negative' values are obtained by using combinatorial logic. Specifically, the most significant bit of the data input is extracted from the shift register output and is feed directly to the DAC so as to bypass the ROM. In the DAC, the most significant bit is simply used as a +/- switch to control the 'sign' of the output. The most significant bit is used as an input to a pair of ExOr gates which feed the remaining bits of the shift register output to the ROM. The most significant 'sign' bit of the input data sequence is also used to select the negative phase contribution (note that only the SIN($\theta$) term is inverted since COS($\theta$) = COS($-\theta$)).

The simple technique of bypassing the look up table with the most significant 'sign' bit of the input data sequence and using it instead directly to change the sign of the DAC output has a profound effect upon the requirements for the ROM. It reduces them by 50%. Also using this 'sign' bit to select the negative phase contribution and rotating the output rather than passing the phase information through the look up table further reduces the requirements for the ROM, by a factor of four. Thus the circuit of figure 7 compared with that of figure 6 provides an overall reduction in the requirements for the ROM of a factor of eight. This reduction can be translated directly into a corresponding reduction in chip size and power dissipation. The savings are highly significant since much of the power dissipation of the overall system is incurred by the look up table processing. Moreover, there is no reduction in performance. The additional circuitry required (the ExOr gates and the select logic) is very modest and does not add significantly to cost or power consumption. The resulting ROM size (32 x 8 x 2) is easily implemented in 1V technology, and a clocking speed of 2 Mbit/s is sufficient. The saving in power dissipation is therefore readily apparent.

The features of bypassing the ROM with the most significant 'sign' bit of the input data and bypassing the ROM with the accumulated phase information can be used separately. However, as will be appreciated from the above, there is a synergy between the two such that it is advantageous to use both of these features together.

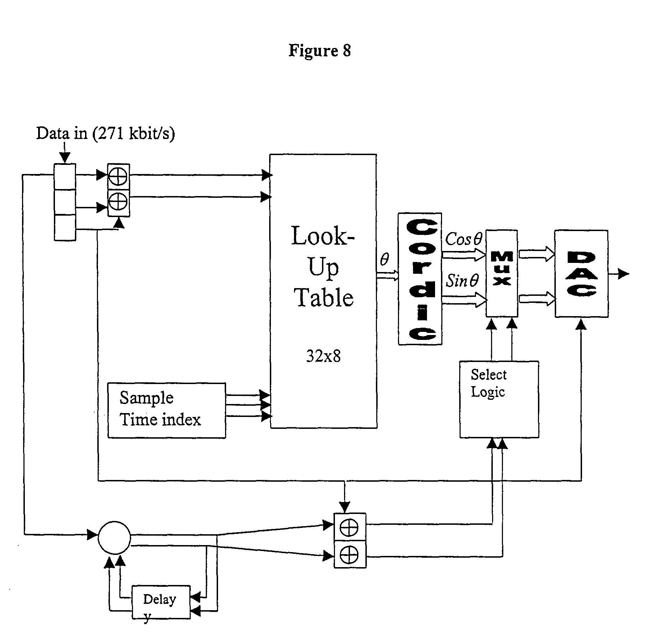

In accordance with a second embodiment of the present invention the requirements for the ROM can be reduced by a still further factor of two. This embodiment uses a processor to convert from $\theta$ to COS($\theta_n$) and SIN($\theta_n$). Consequently the ROM only needs to store the values of $\theta$, thus reducing the ROM storage by a further factor of 2. Although a small amount of further combinational logic is required, the processor can be useful elsewhere in the GSM system (e.g. in the demodulator/equaliser), and the burden of this additional circuitry can thus be reduced. The circuit arrangement of this second embodiment is shown in figure 8, wherein the processor is annotated "CORDIC", which is an abbreviation used herein to mean "Coordinate Rotation DIgital Computer".

In accordance with the first embodiment of the invention, the ROM requirements are reduced to 32 locations each storing a cos(θ) and a sin(θ) value. Hence the bulk of the complexity in a GMSK transmitter using such an embodiment is in generating these Cartesian components from the Gaussian filtered phase angle.

A typical DSP has two arithmetic processing units, one of which is optimised for bit manipulation operations. According to the second embodiment of the invention this BLU (Bit Logic Unit) is used in parallel with the MAC (Multiple Add Cycles) for undertaking this Polar-to-Cartesian conversion, thereby reducing even further the size of the ROM. There are also be other parts of the GSM system (e.g. Viterbi equalisation) where such a simplified coordinate rotation technique could be useful.

To explain the processing undertaken by the so-called CORDIC, next will be described an iterative coordinate rotation technique which only requires power-of-two scaling operations and which rapidly converges to the desired result. This is followed by describing a GMSK transmitter which uses this technique in a highly optimised fashion.

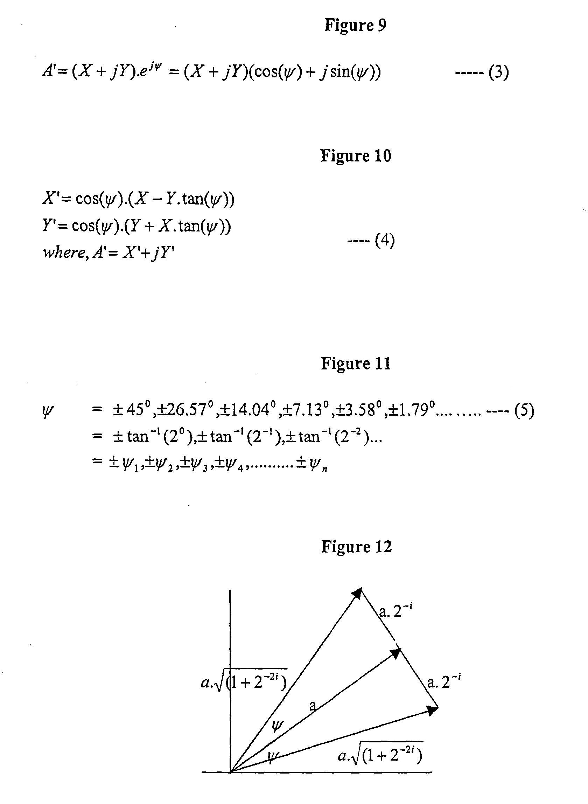

Considering the principles of phase rotation, assume a vector $A = a.e^{j\theta} = X + jY$. This vector can be rotated by a phase angle ψ using equation 3 shown in figure 9. Expanding, and simplifying, equation 3 results in equation 4, which is shown in figure 10. For this embodiment of the invention it is desired to force the angle of rotation to be such that $\tan(\psi) = \pm 2^{-n}$ where n is an integer ≥ 0. The candidate phase angles that give this property are given by equation 5, as set out in figure 11. This operation is shown in figure 12. Note that the amplitude scaling is $\sqrt{(1+2^{-2i})}$. In addition, the rotation of the input vector by ± 90° is allowed. This means that a vector rotation by ψ consists only of add/subtract operations and a right bit shift operation (to scale by a power-of-two), except in the case of 90° when no power-of-two scaling is involved. This is easily achieved in the Bit Logic Unit of known processors.

It is noted that, except for the first 90° rotation, the operation indicated in equation 4 also involves an amplitude scaling (by cos(ψ)) but this is completely defined and can be allowed for by scaling the final output when the iterative phase rotation algorithm (to be described) has been completed. Indeed for applications like GMSK, which is a constant amplitude modulation technique, this amplitude scaling can often be ignored.

Next a description will be given of the iterative technique for calculating the Cartesian components cos(θ) and sin(θ) from the phase angle θ, by iterative use of equation 4.

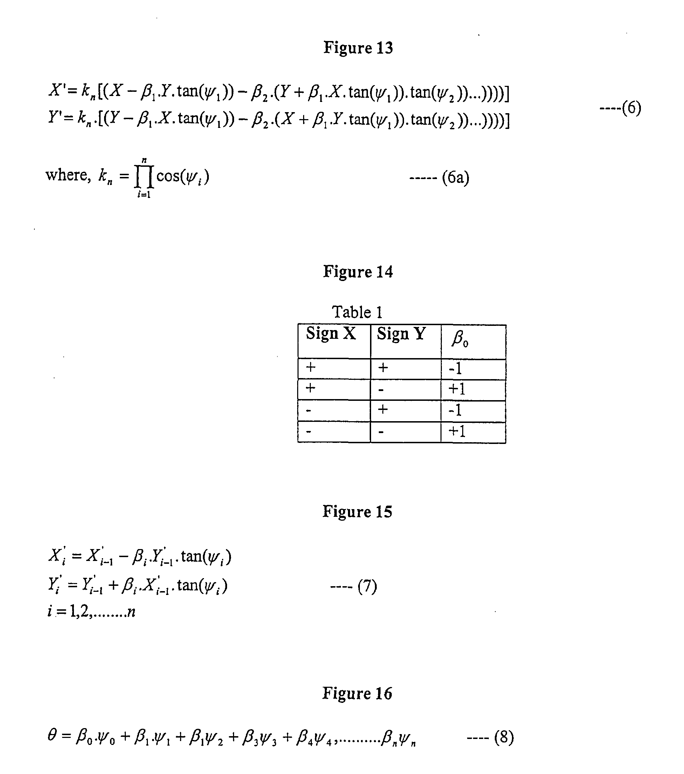

The basic technique involves applying a sequence of pseudo-rotations of the form shown in equation 4, subject to the constraint that ψ is ± 90° or tan(ψ) is a power-of-two. Allowance is made for the possibility that the rotations can be either positive or negative, controlled by the sequence: $\beta_0, \beta_1, \beta_2 \ldots\ldots \ldots\ldots \beta_n$ where, $\beta_i = \pm 1$, I = 0, 1, 2, .... n. This results in equation 6, which is shown in figure 13. So the desired polar-to-Cartesian conversion is obtained by a successive phase rotation (by $\psi_i$) of the input vector (X + jY) towards the real axis, and terminates when the Y' value is sufficiently close to zero.

By examining the signs of both X and Y in accordance with Table 1 (see figure 14), the first and most significant rotation by ± 90° is established.

$$X_0^{'} = -\beta_0 . Y$$

i.e.

$$Y_0^{'} = +\beta_0 . X$$

The first step is unique in that a perfect rotation step is performed. At each subsequent pseudo-rotation step, the value $\beta_i$ of the rotated vector is determined by examining the sign of the value of $Y_{i-1}$ indicated in figure 15. The subsequent rotation is always such that this value converges towards 0. At the end of n + 1 pre-established pseudo-rotation steps, $Y_n$ should be very close to zero, and the desired phase angle is obtained according to equation 8, shown in figure 16. For an angle accuracy of less than 1° then at least 8 rotation steps are required.

Polar-to-Cartesian conversion can be easily achieved by reversing the above process. Starting with θ in one register and X=1, Y=0 in two other registers, the successive rotations take place so that equation 5 converges to zero. At the end of n iterations the X and Y registers then contain the desired values of cos(θ) and sin(θ) but with an amplitude scaling dependent on the number of cycles in the iteration. This scaling can usually be ignored or compensated for by a fixed scaling of the transmitter output power.

The iterative processing described above is simple to carry out either in hardware or in DSP firmware. The algorithm requires a total of 3 registers (for the X, Y and θ values). A right-shift (power-of-two) operation is required for successive iterations, and the ability to add or subtract two numbers is needed. This is all available in the Bit Arithmetic Logic unit of a typical DSP processor.

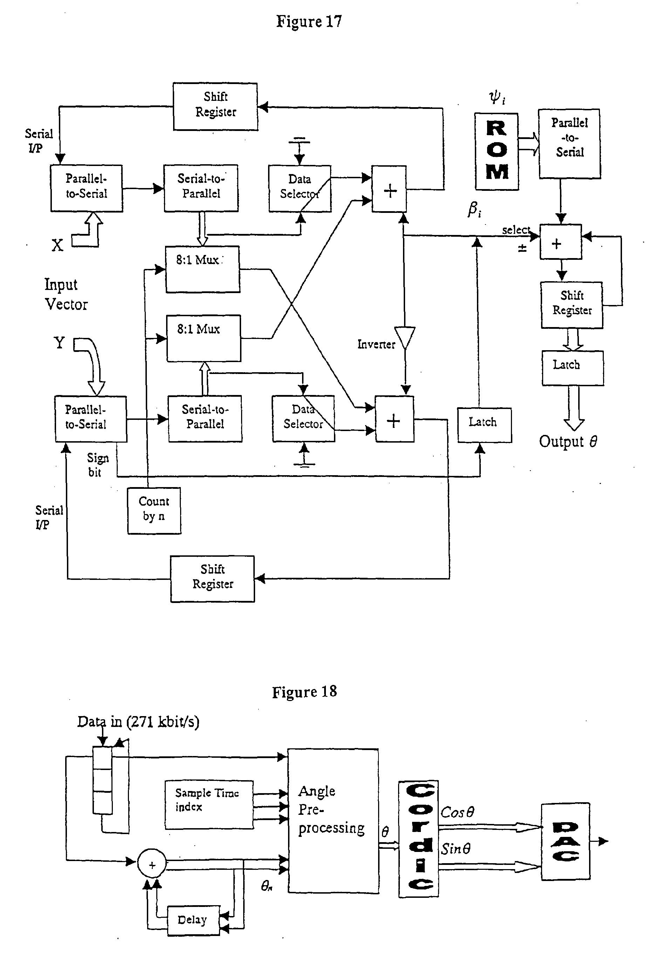

In addition, figure 17 gives an example of the technique implemented in bit-serial recursive hardware which is suitable for implementation in an ASIC.

The second embodiment of the invention iteratively performs Polar-to-Cartesian conversion, using only power-of-two scaling operations and the simple addition/subtraction of two numbers. Unlike conventional Polar-to-Cartesian conversion, no multipliers, Taylor Series expansions or large look-up tables are required. This form of processing readily lends itself to DSP architecture which will typically have a relatively under-utilised BLU which is highly optimised for this type of processing.

From the above description of various embodiments, it will be apparent that this invention provides an implementation of a GMSK transmitter using only a small look-up table and a few simple external components. Further embodiments will be readily apparent - for example the gaussian filter can be implemented in ROM and the Integrator/ $COS(\theta_n)$, $SIN(\theta_n)$ look-up table implemented using the highly efficient digital CORDIC in hardware. The address for the ROM can also easily be performed in the DSP.

As described above, a look-up is used to calculate the combined operations of Gaussian filtering and polar-to cartesian conversion of $\theta$ to $\sin(\theta)$ and $\cos(\theta)$.

By utilising the CORDIC the $\sin(\theta)$ and $\cos(\theta)$ operations no longer need to be explicitly generated by the input ROM. Hence, the only algorithmic processing which remains is the Gaussian filtering to generate the correlative state vector, $\theta(t,\alpha)$. Furthermore, since the input data to the Gaussian filter is $\alpha i$ = +/-1, the output is a simple +/- combination of the filter coefficients ($g_n$), as shown in the above equation for $\theta$out and equation 2 (figure 5). Hence, the correlative state vector $\theta(t,\alpha)$ is in the same form as that involved in the iterative phase rotations in the CORDIC (c.f. equation 8). Conseqently, the same part of the CORDIC hardware that performs these iterations can be used to derive the correlative state vector. In this case, the input data sequence ($\alpha i = {}_{+/-}1$) is used to determine the signs of $g_n$ sequence used to derive $\theta(t,\alpha)$. Note that, during this 'pre-processing' stage, only the angle rotation part of the CORDIC system needs to be clocked (since the X, Y manipulation part of the processor is not used until polar-to-cartesian conversion takes place), thereby reducing power consumption.

By this means, the correlative state vector can be calculated efficiently using the hardware already available for the basic CORDIC. However, the overall clock speed may increase slightly to perform the additional phase additions or subtractions.

The angle calculations used in the basic CORDIC operation ($\psi$ 's) use a small local memory to store the rotation angle values (equation 5, and as shown in figure 17). Therefore, it is possible to extend this table to include the Gaussian filter coefficients and extend the select and angle accumulation process to include these values. The actual set of Gaussian coefficients that is used in a given sampling interval is determined by the 'sample time index' box in figure 18.

Furthermore, the accumulated phase angle can be readily incorporated with a further iteration. Indeed, by allowing the phase angle to accumulate between successive conversions (i.e. by not resetting the phase register to zero each time) the accumulated phase can be generated directly within the CORDIC. This avoids the need to calculate this explicitly in a separate accumulator.

Following the 'pre-processing' stage, the resultant phase angle (equation 2) is then rotated by a series of angles, $\psi$ (equation 5), in accordance with the normal CORDIC operation, as is described above.

Hence, the two additional angle 'pre-processing' stages that are incorporated into the basic CORDIC to accommodate GMSK are:

I. Calculation of the correlative phase state, $\theta(t,\alpha)$.
II. Calculation of $\theta_{n,,}$ the accumulated phase.

The advantages of this CORDIC based GMSK design are:

1. The original ROM (256 x 8 x 2 bits) used to create the GMSK 1 and Q signals has been replaced by a hardware efficient CORDIC design. The large-capacity input ROM has been replaced by a small extension ROM that stores the Gaussian filtering rotation angles inside the CORDIC.

2. The technique utilises the existing CORDIC hardware, and thereby removes the need for some accumulators. The internal clock speed may need to increase slightly, but this will not normally be a problem for such a simple circuit.

3. The processing architecture is highly flexible and can be readily extended to include different filters for the speactral shaping, different sampling rates, modulation index, modulation technique etc. This would not be easy to achieve with the hard-wired, fully ROM-based approach.

4. A RAM that allows for varying filter coefficients can easily replace the angle rotation ROM in the CORDIC. Hence this architecture is highly adapted for the receiver channel equaliser, where the Gaussian filter needs to be convolved with the (time varying) channel impulse response. A fully ROM-based approach would not be so easy to adapt for this purpose.

5. It is completely multiplier-free - this is important consideration at th high processing speeds involved.

The iterative processing described above is relatively simple to carry out either in hardware or in DSP firmware. The algorithm requires a total of 3 registers (for the X, Y and θ values). A right-shift (power-of-two) operation is required for successive iterations, and the ability to add or subtract two numbers is needed. This is relatively easy to implement with modern ASIC (Application Specific Integrated Circuit) hardware techniques.

In addition, figure 17 is an example of the technique implemented in bit-serial recursive hardware, which is suitable for implementation in a relatively small ASIC. Other processing structures are possible using bit-parallel processing, pipelining of CORDIC rotations etc.

The CORDIC technique described above reduces the input ROM requirement for GMSK by exploiting a CORDIC iterative rotation algorithm, which enables polar-to-cartesian conversion using only power-of-two scaling operations and the simple addition/subtraction of numbers. Unlike conventional polar-to-cartesian conversion, no multipliers, Taylor series expansions or large look-up tables are required. Hence it lends itself to relatively simple hardware implementation.

The present invention provides an implementation of a GMSK transmitter using a CORDIC, extended by a small look-up table.

A device embodying the present invention can have the advantage that it can be easily controlled by an efficient power management system (driven by the VAD - Voice Activity Detector) to turn off the transmitter and hence conserve handset battery life. This is not so easily achieved in conventional DSP's if the GMSK baseband processing is performed algorithmically.

Four designs were considered for the sake of assessing the performance of embodiments of the present invention.

**Design A:** All Gaussian filtering was performed in the DSP as a conventional Finite-Impulse-Response (FIR) operation.

**Design B:** All the GMSK processing was performed in a ROM table look-up (as per Fig. 6). Two ROM tables are required (for the Sin(θ) and Cos(θ) tables). The address calculation can be readily performed on either the DSP or as external random-logic. In either case it is assumed that no additional DSP cycles are required for ROM address calculation.

**Design C:** The GMSK processing was implemented using the simplified structure of figure 7, in accordance with the first embodiment of the present invention.

**Design D:** The GMSK processing was implemented as a combination of ROM table look-up and CORDIC processing and implemented as shown in figure 8, in accordance with the second embodiment of the present invention.

The basic GMSK parameters were assumed to be as follows:

- Oversampling ratio = 8,
- Modulation index = .5,
- Gaussian filter time span = 4T
- ROM accuracy = 8 bits/word,
- Angle accuracy (Cordic) < 1 deg.
- Input data rate = 271 kbit/s,
- Output data rate = 2.168 MHz (to the RF stage)

The results of the comparison were as shown in the Table below.

| **GMSK Complexity & Power** | | | | | | |
|---|---|---|---|---|---|---|
| **GMSK Design** | **ROM Size Bytes** | **ROM Gates Count** | **RL Gates Count** | **Total Gates Count** | **Total DSP MIPs** | **Power mW** |
| Design A | 512 | 40960 | 0 | 40960 | 13 | 50 |
| Design B | 512 | 40960 | 103 | 41063 | 0 | 22.3 |

(continued)

| GMSK Complexity & Power | | | | | | |
|---|---|---|---|---|---|---|
| GMSK Design | ROM Size Bytes | ROM Gates Count | RL Gates Count | Total Gates Count | Total DSP MIPs | Power mW |
| Design C | 64 | 5120 | 195 | 5315 | 0 | 2.9 |
| Design D | 32 | 2560 | 195 | 2755 | 0 | 1.5 |

Notes and Assumptions used for the comparisons:

Gate calculations:

- 10 gates needed per ROM bit, including address decoding
- Exclusive-Or operation needs 3 BC gates
- Shift-register needs 9 BC gates/bit
- 2-bit adder needs 10 BC gates
- 3-bit counter requires 48 BC gates (approx)

MIPs estimates:

- Design A requires 4 MAC operations + 2 additions (for the integrated phase state)
- ROM Address generation for Design B requires no DSP cycles (i.e. can be performed in parallel)
- Cordic processing for Design C can be performed in parallel in the DSP using the BLU (for example).
- For better than 1 deg. of accuracy for the phase angle the Cordic requires 8 rotational steps.
- I/O between the DSP and ROM has been ignored since no design offers any particular advantage/disadvantage. I/O power dissipation is heavily technology dependant and in any case ROM look-up may be performed on-chip for small ROM look-up tables (as in designs C and D).

Power dissipation:

- Power dissipation is based on a standard DSPOakCore (running at 60MHz), and the power dissipation per BC Gate is based on the EPSON 50000 Series .35 μm CMOS process. At 3.3V the power per BC gate is assumed to be 0.25 μW/MHz.
- Interprocess and bus drivers have not been included in the power calculations. The DAC and Mux have also been ignored for comparison purposes.

## Claims

**1.** A signal processor for modulating and/or demodulating input data containing phase information, the processor comprising: a data input unit for receiving the input data, a memory unit for storing a look up table addressable by the input data, a multiplexer unit for multiplexing outputs from the memory unit, an accumulated phase unit for extracting phase information from the input data, and a digital-to-analog converter for receiving an input from the multiplexer unit and providing the output of the signal processor, **characterised in that** the accumulated phase unit is connected between the data input unit and the multiplexer unit so as to bypass the memory unit and **in that** a bypass path is connected between the data input unit and the digital-to-analog converter so as to enable part of the input data to bypass the memory unit.

**2.** A signal processor as claimed in claim 1, further comprising a coordinate rotation processor connected for processing the output of memory unit before it is passed to the multiplexer unit.

**3.** A signal processor for modulating and/or demodulating input data containing phase information, the processor comprising: a data input unit for receiving the input data, a coordinate rotation processor connected to receive data from the data input unit, and a digital-to-analog converter for receiving an input from the coordinate rotation processor and providing the output of the signal processor, **characterised in that** the coordinate rotation processor is arranged so as to use the received data to calculate a correlative phase state as well as perform iterative phase rotations while also deriving an accumulated phase angle.

**4.** A signal processor as claimed in claim 3, in which the coordinate rotation processor comprises a memory unit having stored therein rotation angle values and Gaussian filter coefficients.

**5.** A signal processor as claimed in claim any of claim 2 to 4, wherein the coordinate rotation processor is a bit-serial recursive processor.

**6.** A transmitter containing a signal processor as claimed in any preceding claim.

**7.** A receiver containing a signal processor as claimed in any of claims 1 to 5.

**8.** A method of signal processing comprising modulating and/or demodulating input data containing phase information using a processor having: a data input unit, a memory unit, a multiplexer unit, an accumulated phase unit, and a digital-to-analog converter, the method comprising the steps of: applying the input data to the data input unit, storing in the memory unit a look up table addressable by the input data, multiplexing outputs from the memory in the multiplexer unit, extracting phase information from the input data using the accumulated phase unit, and converting the output of the multiplexer unit to provide an analog output using the digital-to-analog converter, **characterised by** passing the extracted phase information to the multiplexer unit so as to bypass the memory unit and applying part of the input data to the digital-to-analog converter so that said part of the input data bypasses the memory unit.

**9.** A method of signal processing as claimed in claim 8, further comprising the step of performing an iterative process to calculate cos and sin values from phase angle information output from the memory unit and applying the calculated cos and sin values to the multiplexer unit for the multiplexing step.

**10.** A method of signal processing as claimed in claim 9, wherein the step of performing an iterative process consists of add/subtract operations and a right bit shift operation.

**11.** A method of signal processing as claimed in claim 9, wherein the iterative process involves the application of successive phase rotations with a convergence towards zero.

**12.** A method of signal processing comprising modulating and/or demodulating input data containing phase information using a processor having: a data input unit, for receiving the input data, a coordinate rotation processor connected to receive data from the data input unit, and a digital-to-analog converter for receiving an input from the coordinate rotation processor and providing the output of the signal processor, **characterised by**: performing calculation of a correlative phase state; performing iterative phase rotations; and deriving an accumulated phase angle all within the coordinate rotation processor.

**13.** A method as claimed in claim 12, further comprising the step of using a single memory unit within the coordinate rotation processor to store rotation angle values and Gaussian filter coefficients.

**14.** A signal processor substantially as hereinbefore described with reference to and as illustrated in figure 7 of the accompanying drawings.

**15.** A signal processor substantially as hereinbefore described with reference to and as illustrated in figure 8 of the accompanying drawings.

**16.** A signal processor substantially as hereinbefore described with reference to and as illustrated in figures 8 and 17 of the accompanying drawings.

**17.** A signal processor substantially as hereinbefore described with reference to and as illustrated in figures 8 and 18 of the accompanying drawings.

**18.** A method of signal processing substantially as hereinbefore described with reference to and as illustrated in figure 7 of the accompanying drawings.

**19.** A method of signal processing substantially as hereinbefore described with reference to and as illustrated in figure 8 of the accompanying drawings.

**20.** A method of signal processing substantially as hereinbefore described with reference to and as illustrated in figures 8 and 17 of the accompanying drawings.

**21.** A method of signal processing substantially as hereinbefore described with reference to and as illustrated in figures 8 and 18 of the accompanying drawings.

Figure 1

Speech coder
CRC (53,50) encoder
CC(2,1,5) encoder
Inter-leaver
Encrypt.
Burst assemb.
GMSK Mod.
Speech I/O
13 kbit/s
22.8 kbit/s
271 kbit/s
Speech decoder
CRC (53,50) decoder
CC(2,1,5) decoder
Deinter-leaver
Decrypt
Burst De-assemb.
GMSK demod.

**Figure 2**

271 kbit/s
Up-sample to fs
Gaussian shaping filter
Integrator (add accumulated phase state)
Convert $\theta$ to sin($\theta$) & cos($\theta$)
DACs
I
Q

**Figure 3**

I
Q
Balanced Modulator 900 MHz
Bandpass filter
RF transmitter
To Antenna

**Figure 4**

$$g_n = c\left[\sum_{k=0}^{\infty} \frac{(-1)^k b^a}{ak\ !}\left(\left(n + \frac{\eta}{2}\right)^a - \left(n - \frac{\eta}{2}\right)^a\right)\right]$$

$$a = 2k + 1,$$

$$b = \pi\sqrt{\frac{2}{\ln 2}} \cdot \frac{B_N}{\eta} \qquad \text{----- (1)}$$

$$c = \frac{1}{2\sqrt{\pi}\,.\eta}$$

$$\eta = \frac{T}{D}$$

**Figure 5**

$$\phi(t,a) = 2.\pi.h_F \sum_{i=n-L+1}^{n} \alpha_i.q(t-iT) + \pi.h_F \sum_{i=-\infty}^{n-L} \alpha_i$$

$$= \theta(t,\alpha) + \theta_n \qquad \text{...... (2)}$$

where $\alpha_i$ = data elements

Figure 6

Data in (271 kbit/s)
3 bits
Shift
Register
2 bits
Look-
Up
Table
256x8x2
8 bits I
8 bits Q
MUX
DAC
Accumulated
Phase State
T
Sample
Time
3 bits
0, 1, 2 ...7, 0..

Figure 7

Data in (271 kbit/s)
ExOr
MS bit
Shift
Register
Look-
Up
Table
32x8x2
Sample
Time index
0,1,2,3 …7,0 ….
I
Q
Mux
I'
Q'
DAC
+/-
Select
Logic
(Table 1)
I/P
Accum.
Phase
Delay
y
Mod 4
ExOr

**Table 1**

| I/P | I' | Q' |
|---|---|---|
| 0 | I | Q |
| $\pi/2$ | -Q | I |
| $-\pi/2$ | Q | -I |
| $\pi$ | -I | -Q |

**Figure 8**

Data in (271 kbit/s)
Look-Up Table
32x8
Sample Time index
θ
Cordic
Cosθ
Sinθ
Mux
DAC
Select Logic
Delay
y

## Figure 9

$$A' = (X + jY).e^{j\psi} = (X + jY)(\cos(\psi) + j\sin(\psi)) \qquad \text{----- (3)}$$

## Figure 10

$$\begin{aligned} X' &= \cos(\psi).(X - Y.\tan(\psi)) \\ Y' &= \cos(\psi).(Y + X.\tan(\psi)) \\ where,\ A' &= X' + jY' \end{aligned} \qquad \text{---- (4)}$$

## Figure 11

$$\begin{aligned} \psi &= \pm 45^0, \pm 26.57^0, \pm 14.04^0, \pm 7.13^0, \pm 3.58^0, \pm 1.79^0 \ldots\ldots\ldots \quad \text{---- (5)} \\ &= \pm \tan^{-1}(2^0), \pm \tan^{-1}(2^{-1}), \pm \tan^{-1}(2^{-2}) \ldots \\ &= \pm \psi_1, \pm \psi_2, \pm \psi_3, \pm \psi_4, \ldots\ldots\ldots\ldots \pm \psi_n \end{aligned}$$

## Figure 12

a. 2^-i
a. 2^-i
a.√(1 + 2^-2i)
a
ψ
ψ
a.√(1 + 2^-2i)

**Figure 13**

$$X' = k_n[(X - \beta_1.Y.\tan(\psi_1)) - \beta_2.(Y + \beta_1.X.\tan(\psi_1)).\tan(\psi_2))...))))]$$
$$Y' = k_n.[(Y - \beta_1.X.\tan(\psi_1)) - \beta_2.(X + \beta_1.Y.\tan(\psi_1)).\tan(\psi_2))...))))] \quad \text{----(6)}$$

where, $k_n = \prod_{i=1}^{n} \cos(\psi_i)$ ----- (6a)

**Figure 14**

Table 1

| Sign X | Sign Y | $\beta_0$ |
|---|---|---|
| + | + | -1 |
| + | - | +1 |
| - | + | -1 |
| - | - | +1 |

**Figure 15**

$$X_i' = X_{i-1}' - \beta_i.Y_{i-1}'.\tan(\psi_i)$$
$$Y_i' = Y_{i-1}' + \beta_i.X_{i-1}'.\tan(\psi_i) \quad \text{---- (7)}$$
$$i = 1,2,........n$$

**Figure 16**

$$\theta = \beta_0.\psi_0 + \beta_1.\psi_1 + \beta_1\psi_2 + \beta_3\psi_3 + \beta_4\psi_4,..........\beta_n\psi_n \quad \text{---- (8)}$$

Figure 17

Shift Register
Serial I/P
Parallel-to-Serial
Serial-to-Parallel
Data Selector
+
X
8:1 Mux
Input Vector
8:1 Mux
Y
Parallel-to-Serial
Serial-to-Parallel
Data Selector
+
Inverter
Latch
Sign bit
Count by n
Serial I/P
Shift Register
$\psi_i$
ROM
Parallel -to- Serial
$\beta_i$
select
±
+
Shift Register
Latch
Output $\theta$

Figure 18

Data in (271 kbit/s)

Sample Time index

Angle Pre-processing

$\theta$

$\theta_n$

Delay

+

Cordic

$Cos\theta$

$Sin\theta$

DAC